# EUROPEAN PATENT SPECIFICATION

(11) **EP 2 177 547 B1**
(45) Date of publication and mention of the grant of the patent: **02.10.2013**
(21) Application number: 08792347.0
(22) Date of filing: 08.08.2008
(51) Int. Cl.: C08F 20/42, C08K 3/06, C08K 5/14, C08L 9/02, C09K 3/10, C08F 236/12, C08K 5/098

(54) **USE OF A HIGHLY SATURATED NITRILE RUBBER AND CROSSLINKED RUBBER AS A SEALING MATERIAL**
VERWENDUNG EINES HOCHGESÄTTIGTEN NITRILKAUTSCHUKS UND EINES VERNETZTEN KAUTSCHUKS ALS EIN VERSIEGELUNGSMATERIAL
UTILISATION D'UN CAOUTCHOUC NITRILE HAUTEMENT SATURÉ ET D'UN CAOUTCHOUC RÉTICULÉ COMME MATÉRIAU D'ÉTANCHÉITÉ

(30) Priority: 10.08.2007 JP 2007209382; 27.09.2007 JP 2007251081
(43) Date of publication of application: 21.04.2010
(73) Proprietor: Zeon Corporation, Tokyo 100-8246 (JP)
(72) Inventor: HOSOTANI, Daizo, Tokyo 100-8246 (JP)
(74) Representative: Albrecht, Thomas
(86) International application number: PCT/JP2008/064330
(87) International publication number: WO 2009/022660

(56) References cited:
- EP-A1- 0 704 480
- WO-A1-2007/049651
- JP-A- 2004 285 293
- JP-A- 2007 031 631
- JP-A- 2007 063 429
- JP-A- 2008 163 074
- JP-A- 2008 179 671

## Description

### TECHNICAL FIELD

The present invention relates to the use of a highly saturated nitrile rubber as a seal material used for sealing a solution containing an alcohol and to such use of a cross-linked rubber obtained by cross-linking the same.

### BACKGROUND ART

The ink jet recording system is a system making an ink containing water and an alcohol jet out from ultrafine nozzles (print head nozzles) formed on a recording head to make it deposit on a sheet-shaped recording medium (recording paper etc.) so as to record images, letters, etc. This system produces little noise at the time of recording, enables high speed printing, and further facilitates color formation by a plurality of nozzles, so is being widely utilized in printers for various terminals, copiers, etc.

In such an ink jet type of recording apparatus, an ink cartridge in which the water soluble ink is filled is connected through an ink feed path formed in the recording apparatus body to the recording head so as to enable ink to be fed to the recording head. Further, it is designed so as to enable ultrafine nozzles formed at the recording head to eject the ink. Here, the ink cartridge is provided with an ink feed hole, while the ink feed path of the recording apparatus body is provided with a hollow needle. By attaching the ink cartridge to the recording apparatus body, the hollow needle is inserted into the ink feed hole of the ink cartridge and coupled with the same. Due to this, the ink cartridge supplies ink through the hollow needle to the recording head.

While the ink cartridge is filled inside it with a water soluble ink, the cartridge is attached to the hollow needle formed at the recording apparatus body. Therefore, to secure air-tightness of the contact part with the hollow needle, a packing comprised of a rubber material or elastomer resin or other elastic material is used. For example, Patent Document 1 discloses the point of use as packing for an ink cartridge a packing comprised of a thermoplastic elastomer containing polyethylene oil in an amount of 25 wt% or less. Note that, this Patent Document 1 describes, relating to the content of the polyethylene oil in the thermoplastic elastomer, that making the lower limit 20 wt% is preferable.

On the other hand, in the past, highly saturated nitrile rubber (nitrile-group containing highly saturated copolymer rubber) obtained by adding hydrogen to (by hydrogenating) carbon-carbon unsaturated bonds of nitrile rubber (nitrile-group containing copolymer rubber having α,β-ethylenically unsaturated nitrile monomer units) has been known as rubber superior in oil resistance, heat aging resistance, and ozone resistance. Cross-linked products of such highly saturated nitrile rubber are being used for belts, hoses, gaskets, packings, oil seals, and other various rubber products.

Such highly saturated nitrile rubber is promising for use as packing for the above-mentioned ink cartridges due to its being superior in heat aging resistance. However, on the other hand, as the water soluble ink filled in ink cartridges, to improve the water-proofness after printing, in recent years pigments or dyes soluble in alcohol have been used. Further, to prevent drying of the ink at the tips of print head nozzles, improve the speed of penetration of the ink into the recording paper, and for other purposes, the amount of alcohol contained in the ink has become greater. Further, if using such a highly saturated nitrile rubber or other rubber material or resins (for example, polyethylene or other polyolefin resin) as packing for ink cartridges, there will be the problem that the ingredients contained in these rubber or resins will end up leaching out due to the effects of the alcohol contained in the ink and the nozzles of the recording head will end up becoming clogged. In particular, such a problem had become remarkable when the amount of alcohol contained in the ink became too great. In addition, in recent years, in ink jet type recording apparatuses, to deal with the higher definition of printing and the faster speed of printing, the nozzles of recording heads have been made increasingly finer. From this viewpoint as well, solution of the above problem has been desired.

Further, highly saturated nitrile rubber is being used also as a seal material for fuel oil in automobiles etc., but in a seal material for fuel oil in automobiles, reduction of loss of gasoline due to evaporation is being earnestly studied. For this reason, the highly saturated nitrile rubber used for the seal material for fuel oil in automobiles is being required to be improved in heat aging resistance and fuel oil resistance. In particular, in recent years, from the viewpoint of depletion of fossil fuels and suppression of production of carbon dioxide, mixing ethanol and other alcohol into gasoline, diesel oil, and other fuel oil has been studied. In such a case, with the conventionally used highly saturated nitrile rubber, the fuel oil resistance (seal performance) ends up deteriorating. For this reason, highly saturated nitrile rubber for a seal material superior in heat aging resistance and exhibiting a high fuel oil resistance with respect to gasoline containing alcohol has been desired.
[Patent Document 1] Japanese Patent Publication (A) No. 2001-191547 (corresponding U.S.: US2002/0024572A1)

EP0704480 A1 discloses nitrile group-containing highly saturated rubbers obtained by the copolymerisation of acrylonitrile and butadiene in an emulsion polymerisation in the presence of carboxylic acid-type emulsifiers. JP2004285293 discloses crosslinkable nitrile rubbers which have superior adhesivity with fibers or metals.

### DISCLOSURE OF THE INVENTION

### PROBLEM TO BE SOLVED BY THE INVENTION

The present invention has as its object the use of highly saturated nitrile rubber as a seal material where leaching of ingredients due to water soluble ink or another solution containing an alcohol is effectively prevented and, further, able to give cross-linked rubber superior in heat aging resistance and of a cross-linked rubber for use as a seal material obtained by cross-linking this highly saturated nitrile rubber. Further, the present invention has as its object the use of cross-linked rubber as a seal material exhibiting a high fuel oil resistance to gasoline or diesel oil containing an alcohol (in particular, ethanol) and superior in heat aging resistance.

### MEANS FOR SOLVING THE PROBLEMS

The inventor engaged in intensive research to solve the above problem and as a result discovered that the above object can be achieved by controlling the amount of surfactant in the highly saturated nitrile rubber to a predetermined range and thereby completed the present invention.

That is, according to the present invention, there is provided:
(i) The use of a highly saturated nitrile rubber as a seal material used for sealing a solution containing an alcohol, wherein an iodine value of the highly saturated nitrile rubber is 80 or less and a content of a surfactant of the highly saturated nitrile rubber is 0.4 wt% or less, and the content of a surfactant of the highly saturated nitrile rubber is found by using a mixture of ethanol and toluene (ethanol 70 vol%, toluene 30 vol%) as an extraction solution, finding the amount of surfactant (total of amount of organic acid and amount of soap) by a method similar to JIS K6237.
(ii) The use of a cross-linkable nitrile rubber composition as a seal material used for sealing a solution containing an alcohol, wherein the cross-linkable nitrile rubber composition is obtained by blending a highly saturated nitrile rubber as set forth above with a cross-linking agent.
(iii) The use of a cross-linked rubber as a seal material used for sealing a solution containing an alcohol, wherein the cross-linked rubber is obtained by cross-linking a cross-linkable nitrile rubber composition as set forth above.
In the highly saturated nitrile rubber for use as a seal material of the present invention, preferably a content of a soap is 0.08 wt% or less.
In the highly saturated nitrile rubber for use as a seal material of the present invention, preferably an amount of methanol extraction is 0.7 wt% or less.
In the highly saturated nitrile rubber for a seal material, preferably said highly saturated nitrile rubber is one produced by performing a hydrogenation reaction on nitrile rubber obtained by emulsion polymerization using an anionic surfactant.
In the highly saturated nitrile rubber for a seal material of the present invention, preferably said anionic surfactant is a caprate.

Preferably, the cross-linked rubber for use as a seal material of the present invention is a seal material for an ink cartridge or a seal material for a fuel oil.
Further, preferably the above fuel oil is an ethanol-containing gasoline or diesel oil containing ethanol.

### EFFECTS OF THE INVENTION

According to the present invention, there is provided the use of highly saturated nitrile rubber as a seal material where leaching of ingredients due to water soluble ink or another solution containing an alcohol is effectively prevented and, further, able to give cross-linked rubber superior in heat aging resistance and a cross-linked rubber for use as a seal material obtained by cross-linking this. In particular, according to the present invention, even when the amount of alcohol in the solution containing an alcohol is relatively large, it is possible to provide a highly saturated nitrile rubber and cross-linked rubber which can effectively prevent leaching of a contained ingredient. The cross-linked rubber for use as a seal material according to the present invention makes use of the above characteristic and in particular can be suitably used for the application of packing for ink cartridges used for ink jet type recording apparatuses.

In addition, the cross-linked rubber used as a seal material according to the present invention exhibits a high fuel oil resistance with respect to a fuel oil containing an alcohol and, further, is superior in heat aging resistance, so can be suitably used as a seal material for fuel oil containing an alcohol (in particular, ethanol).

### BEST MODE FOR CARRYING OUT THE INVENTION

### Highly Saturated Nitrile Rubber For Seal Material

The highly saturated nitrile rubber used as a seal material of the present invention (below, sometimes referred to as the "highly saturated nitrile rubber (A)") is one used as a seal material for sealing a solution containing an alcohol and having an iodine value of 80 or less and a content of a surfactant of 0.4 wt% or less.

The seal material of the application of the highly saturated nitrile rubber (A) of the present invention may be one for sealing a solution containing an alcohol. Gaskets, packings, and various other seals may be mentioned. In the present invention, a seal material for sealing a solution containing an alcohol, in particular, a seal material for an ink cartridge used for an ink jet type recording apparatus, and a seal material for a fuel oil (for example, a fuel oil comprised of an alcohol and gasoline or diesel oil), are preferred.

The iodine value of the highly saturated nitrile rubber (A) of the present invention is 80 or less, preferably 60 or less, more preferably 40 or less, particularly preferably 30 or less. If the iodine value of the highly saturated nitrile rubber (A) is too high, the heat aging resistance and ozone resistance of the obtained cross-linked rubber are liable to fall.

Further, the highly saturated nitrile rubber (A) of the present invention has a content of a surfactant of 0.4 wt% or less, preferably 0.3 wt% or less, more preferably 0.2 wt% or less. If the amount of the surfactant contained in the highly saturated nitrile rubber (A) is too great, when using the obtained cross-linked rubber as a seal material, in particular packing for ink cartridges, the surfactant will leach out due to the alcohol contained in the ink and the nozzles will end up clogging. Alternatively, the leached out surfactant will react with ingredients in the ink forming ingredients insoluble in the solution containing an alcohol and ending up causing nozzle clogging. Further, when used as a seal material for ethanol-containing fuel oil, the heat aging resistance and fuel oil resistance will be inferior, so the permeability of the gasoline or diesel oil and ethanol forming the fuel oil will become higher and end up causing dispersal of the gasoline or diesel oil and ethanol. Note that, the highly saturated nitrile rubber (A) and the cross-linked rubber obtained by cross-linking this have substantially the same extent of surfactant contained in them.

In the present invention, the amount of the surfactant in the highly saturated nitrile rubber (A) is found by using a mixture of ethanol and toluene (ethanol 70 vol%, toluene 30 vol%) as an extraction solution, finding the amount of surfactant (total of amount of organic acid and amount of soap) by a method similar to JIS K6237 (titration by sodium hydroxide and hydrochloric acid using an indicator), and finding the weight ratio (unit wt%) of the extracted surfactant to the highly saturated nitrile rubber before extraction. Note that, as the surfactant contained in the highly saturated nitrile rubber (A), any usual surfactant having both hydrophobic groups and hydrophilic groups able to be extracted and measured by the above method may be mentioned, but from the viewpoint of the stability of the emulsion polymerization reaction, usually an anionic surfactant is contained.

Further, in the present invention, the highly saturated nitrile rubber (A) preferably has a content of a surfactant in the above range and has a content of a soap in the surfactant controlled to the following range. That is, the content of the soap in the highly saturated nitrile rubber (A) is preferably controlled to 0.08 wt% or less, more preferably 0.05 wt% or less, still more preferably 0.04 wt% or less. By making the content of the soap in the surfactant the above range, the effect obtained by making the content of the surfactant the above-mentioned range can be further improved. Note that, in the present invention, a "soap" is a salt of an organic acid. A salt of a fatty acid is preferable, while a sodium salt, potassium salt, and ammonium salt of a fatty acid are particularly preferable. As specific examples of a soap, ones similar to the "specific examples of surfactants acting as emulsifiers" explained later may be mentioned. Further, the amount of soap in the highly saturated nitrile rubber (A) may be measured in measurement of the amount of surfactant explained above.

Further, the amount of methanol extraction of the highly saturated nitrile rubber (A) is preferably 0.7 wt% or less, more preferably 0.6 wt% or less, particularly preferably 0.5 wt% or less. By making the amount of methanol extraction this range, when using the obtained cross-linked rubber as a seal material, in particular packing for ink cartridges, the effect of prevention of leaching of the surfactant (organic acid and soap) and other impurities due to the alcohol can be further improved. Further, by making the amount of methanol extraction the above range, the heat aging resistance can also be improved. Note that, the highly saturated nitrile rubber (A) and the cross-linked rubber obtained by cross-linking this are substantially the same in amount of methanol extraction.

The amount of methanol extraction in the present invention is measured by the following method.
That is, 6 g of highly saturated nitrile rubber diced into 3 mm squares is dispersed in 50 ml of methanol and extracted using a Soxhlet extractor at 65°C for 6 hours, then the methanol is separated by filtration, the methanol is evaporated away from the filtrate, then the residue is dried in vacuo to obtain the methanol extract (solid content). The weight ratio of the obtained methanol extract to the highly saturated nitrile rubber before extraction (unit: wt%) can be found and used as the amount of methanol extraction.

### Highly Saturated Nitrile Rubber (A), Nitrile Rubber (a)

The highly saturated nitrile rubber for used as a seal material (A) of the present invention is formed by performing a hydrogen adding reaction (a hydrogenation reaction) on a specific nitrile rubber (below, sometimes referred to as a "nitrile rubber (a)") and hydrogenating the carbon-carbon unsaturated bonds.

The content of the α,β-ethylenically unsaturated nitrile monomer units in the nitrile rubber (a) and highly saturated nitrile rubber (A) is, in the total monomer units, preferably in the amount of 10 to 60 wt%, more preferably 15 to 55 wt%, particularly preferably 20 to 50 wt%. If the content of the α,β-ethylenically unsaturated nitrile monomer units is too small, the obtained cross-linked rubber is liable to fall in oil resistance, while conversely if too great, it may fall in cold resistance.

The monomer forming the α,β-ethylenically unsaturated nitrile monomer units is not limited so long as being an α,β-ethylenically unsaturated compound having nitrile groups. Acrylonitrile; α-chloroacrylonitrile, α-bromoacrylonitrile, and other α-halogenoacrylonitriles; methacrylonitrile and other α-alkylacrylonitriles; etc. may be mentioned. Acrylonitrile and methacrylonitrile are preferred. As the α,β-ethylenically unsaturated nitrile monomer, a plurality of types of these may also be used together.

The nitrile rubber (a) also usually includes, in addition to the above α,β-ethylenically unsaturated nitrile monomer units, diene monomer units and/or α-olefin monomer units so that the obtained cross-linked rubber holds rubber elasticity.

As the diene monomer forming the diene monomer units, 1,3-butadiene , isoprene, 2,3-dimethyl-1,3-butadiene, 1,3-pentadiene, and other C₄ or higher conjugated dienes; 1,4-pentadiene, 1,4-hexadiene, and other preferably C₅ to C₁₂ nonconjugated dienes may be mentioned. Among these, conjugated dienes are preferable and 1,3-butadiene is more preferable.

The α-olefin monomer forming the α-olefin monomer units is preferably a C₂ to C₁₂ one. Ethylene, propylene, 1-butene, 4-methyl-1-pentene, 1-hexene, 1-octene, etc. may be given as examples.

The content of the diene monomer units and/or α-olefin monomer units in the nitrile rubber (a) is, in the total monomer units, preferably in the amount of 20 to 90 wt%, more preferably 30 to 85 wt%, particularly preferably 40 to 80 wt%. If the content of these monomer units in the nitrile rubber (a) is too small, the obtained cross-linked rubber is liable to drop in elasticity, while if too great, it may be impaired in heat aging resistance and stability in chemical resistance.

The nitrile rubber (a) may also contain another monomer units able to copolymerize with an α,β-ethylenically unsaturated nitrile monomer and a diene monomer and/or α-olefin monomer. As the monomer forming the another monomer units, an α,β-ethylenically unsaturated carboxylic acid ester monomer, aromatic vinyl monomer, fluorine-containing vinyl monomer, copolymerizable antiaging agent etc. may be given as examples.

As the α,β-ethylenically unsaturated carboxylic acid ester monomer, for example, methyl acrylate, ethyl acrylate, propyl acrylate, butyl acrylate, n-dodecyl acrylate, methyl methacrylate, ethyl methacrylate, and other acrylic acid alkyl esters and methacrylic acid alkyl esters with C₁ to C₁₈ alkyl groups; methoxymethyl acrylate, methoxyethyl methacrylate, and other acrylic acid alkoxyalkyl esters and methacrylic acid alkoxyalkyl esters with C₂ to C₁₂ alkoxyalkyl groups; α-cyanoethyl acrylate, β-cyanoethyl acrylate, cyanobutyl methacrylate, and other acrylic acid cyanoalkyl esters and methacrylic acid cyanoalkyl esters with C₂ to C₁₂ cyanoalkyl groups; 2-hydroxyethyl acrylate, 2-hydroxyethyl methacrylate, 3-hydroxypropyl acrylate, and other acrylic acid hydroxyalkyl esters and methacrylic acid hydroxyalkyl esters with C₁ to C₁₂ hydroxyalkyl groups; fluorobenzyl acrylate, fluorobenzyl methacrylate, and other fluorine-substituted benzyl-group containing acrylic acid esters and fluorine-substituted benzyl-group containing methacrylic acid esters; trifluoroethyl acrylate, tetrafluoropropyl methacrylate, and other fluoroalkyl-group containing acrylic acid esters and fluoroalkyl-group containing methacrylic acid esters; dimethyl maleate, dimethyl fumarate, dimethyl itaconate, diethyl itaconate, and other unsaturated polyvalent carboxylic acid polyalkyl esters; dimethylaminomethyl acrylate, diethylaminoethyl acrylate, and other amino-group containing α,β-ethylenically unsaturated carboxylic acid esters; etc. may be mentioned.

As aromatic vinyl monomers, styrene, α-methylstyrene, vinylpyridine, etc. may be mentioned.

As fluorine-containing vinyl monomers, fluoroethylvinyl ether, fluoropropylvinyl ether, o-trifluoromethylstyrene, vinyl pentafluorobenzoate, difluoroethylene, tetrafluoroethylene, etc. may be mentioned.

As the copolymerizable antiaging agent, N-(4-anilinophenyl) acrylamide, N-(4-anilinophenyl)methacrylamide, N-(4-anilinophenyl) cinnamamide, N-(4-anilinophenyl)crotonamide, N-phenyl-4- (3-vinylbenzyloxy)aniline, N-phenyl-4-(4-vinylbenzyloxy)aniline, etc. may be mentioned.

As these other copolymerizable monomers, a plurality of types may be used together. The content of these other monomer units contained in the nitrile rubber (a) is, in the total monomer units, preferably in the amount of 55 wt% or less, more preferably 40 wt% or less, still more preferably 30 wt% or less, particularly preferably 10 wt% or less.

The Mooney viscosity [ML₁₊₄(100°C)] of the nitrile rubber (a) is preferably 10 to 100, more preferably 15 to 80, particularly preferably 20 to 75. If outside this range, the highly saturated nitrile rubber (A) obtained by hydrogenation is liable to become unsuitable in Mooney viscosity. The Mooney viscosity of the nitrile rubber (a) may be adjusted by suitably selecting the amount of the molecular weight adjuster, the polymerization reaction temperature, the concentration of the polymerization initiator, and other conditions.

Further, the Mooney viscosity [ML₁₊₄(100°C)] of the highly saturated nitrile rubber (A) is preferably 15 to 200, more preferably 30 to 150, particularly preferably 45 to 120. If the Mooney viscosity of the highly saturated nitrile rubber (A) is too low, the obtained cross-linked product is liable to drop in mechanical properties, while conversely if too high, it may fall in workability when a cross-linking agent is added to obtain a cross-linkable nitrile rubber composition.

The highly saturated nitrile rubber (A) is preferably produced by using emulsion polymerization using an emulsifier to copolymerize the above monomers and prepare a latex of nitrile rubber (a), then hydrogenating this. Note that, as the emulsifier, due to its good polymerization stability, usually an anionic surfactant is used.
In the present invention, when polymerizing the above monomers by emulsion polymerization and obtaining a latex of nitrile rubber (a), it is preferable to use as the surfactant acting as an emulsifier a C₁₀ or less soap. As the soap used as an emulsifier, a C₆ to C₁₀ one is more preferable, a C₈ to C₁₀ one is still more preferable, and a C₁₀ one is particularly preferable. By using as the surfactant acting as the emulsifier a soap comprised of the above specific numbers of carbon atoms, it is possible to lower the content of surfactant in the highly saturated nitrile rubber (A) after hydrogenation. If using as the surfactant acting as an emulsifier one having too large a number of carbons, the content of surfactant in the highly saturated nitrile rubber (A) after hydrogenation will end up increasing. On the other hand, if using as the emulsifier one having too small a number of carbons, the micelle-forming ability of the emulsifier will fall and the emulsion polymerization reaction will no longer be possible in some cases.
Note that, among the above soaps as well, from the viewpoint of the large effect of reduction of the amount of surfactant in the highly saturated nitrile rubber (A) after hydrogenation, sodium salts, potassium salts, or ammonium salts of these are preferable. Potassium salts of these are particularly preferable.

As specific examples of the surfactant acting as the emulsifier, sodium hexanoate, potassium hexanoate, ammonium hexanoate, and other C₆ soaps; sodium heptanoate, potassium heptanoate, ammonium heptanoate, and other C₇ soaps; sodium octanoate (also referred to as "caprylate"), potassium octanoate, ammonium octanoate, and other C₈ soaps; sodium nonanoate, potassium nonanoate, ammonium nonanoate, and other C₉ soaps; sodium decanoate (also referred to as "caprate"), potassium decanoate, ammonium decanoate, and other C₁₀ soaps; etc. may be mentioned. Among these as well, due to the good reactivity of the emulsion polymerization and much greater effect of reduction of the content of surfactant in the highly saturated nitrile rubber (A) after hydrogenation, sodium nonanoate, potassium nonanoate, sodium decanoate, and potassium decanoate are more preferable, and potassium decanoate (potassium caprate) is particularly preferable.

The amount of the emulsifier used is, with respect to the total monomer as 100 parts by weight, preferably 1 to 10 parts by weight, more preferably 1 to 5 parts by weight, particularly preferably 1.5 to 3.0 parts by weight. If the amount of the emulsifier used is too great, the content of the surfactant in the highly saturated nitrile rubber (A) after hydrogenation becomes greater, while conversely if the amount of the emulsifier used is too small, the stability of the latex falls and the emulsion polymerization reaction can no longer be performed in some cases.

In emulsion polymerization, other than an emulsifier, a polymerization initiator, molecular weight adjuster, and other conventional known secondary materials for polymerization may be used. The method of addition of these secondary materials for polymerization is not particularly limited. The method of addition all together at the start of polymerization, the method of addition divided into batches, the method of continuous addition, or any other method may be employed.

The polymerization initiator is not particularly limited so long as a radical initiator, but potassium persulfate, sodium persulfate, ammonium persulfate, potassium perphosphate, hydrogen peroxide, and other inorganic peroxides; t-butyl peroxide, cumen hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, t-butylperoxyisobutyrate, and other organic peroxides; azobis(isobutyronitrile), azobis(2,4-dimethyl valeronitrile), azobis(cyclohexane carbonitrile), azobis (methyl isobutyrate), and other azo compounds etc. may be mentioned. These polymerization initiators can be used alone or further combined in two or more types. As the polymerization initiator, an inorganic or organic peroxide is preferable.
When using a peroxide as a polymerization initiator, it may be combined with sodium bisulfite, ferrous sulfate, or another reducing agent and used as a redox-type polymerization initiator.
The amount of the polymerization initiator used is, with respect to the total monomers as 100 parts by weight, preferably 0.01 to 2 parts by weight, more preferably 0.03 to 1.8 parts by weight, still more preferably 0.05 to 1.5 parts by weight.

The molecular weight adjuster is not particularly limited, but t-dodecyl mercaptan, n-dodecyl mercaptan, octyl mercaptan, and other mercaptans; carbon tetrachloride, methylene chloride, methylene bromide, and other halogenated hydrocarbons; α-methylstyrene dimer; tetraethyl thiuram disulfide, dipentamethylene thiuram disulfide, diisopropyl xantogen disulfide, and other sulfur-containing compounds etc. may be mentioned. These can be used alone or further combined in two or more types. Among these, mercaptans are preferable and t-dodecyl mercaptan is more preferable.
The amount of the molecular weight adjuster used is, with respect to the total monomers as 100 parts by weight, preferably in the range of 0.1 to 2.0 parts by weight, more preferably 0.1 to 1.0 parts by weight, still more preferably 0.1 to 0.8 part by weight, particularly preferably 0.2 to 0.7 part by weight.

The medium in the emulsion polymerization used is usually water. The amount of water is, with respect to the total monomers as 100 parts by weight, preferably 80 to 500 parts by weight, more preferably 100 to 300 parts by weight.

At the time of the emulsion polymerization, further, in accordance with need, it is possible to use a chelating agent, dispersant, pH adjuster, deoxidizing agent, particle size adjuster, or other secondary materials for polymerization. When using these, their types and amounts use are not particularly limited.

The highly saturated nitrile rubber (A) for a seal material of the present invention is produced by hydrogenation of the above nitrile rubber (a) obtained by emulsion polymerization. At the time of this hydrogenation reaction, if the nitrile groups are also hydrogenated, the cross-linked product will end up falling in oil resistance, so it is necessary to selectively hydrogenate only the carbon-carbon unsaturated bonds.
This selective hydrogenation may be performed by a known method. Any of the oil layer hydrogenation method or aqueous layer hydrogenation method is possible, but the oil layer hydrogenation method is preferable since the amount of surfactant of the highly saturated nitrile rubber (A) can be lowered.

When producing the highly saturated nitrile rubber (A) by the oil layer hydrogenation method, it is preferable to perform this by the following method.
That is, first, the latex of the nitrile rubber (a) prepared by emulsion polymerization is made to coagulate by salting out, is filtered and dried, and then is dissolved in an organic solvent. Next, the nitrile rubber (a) dissolved in the organic solvent is treated by a hydrogenation reaction (oil layer hydrogenation method) to obtain a hydrogenation product. When using an organic solvent comprised of water soluble acetone etc., the obtained hydrogenation product solution is poured into a large amount of water, coagulated, filtered, and dried to obtain the highly saturated nitrile rubber (A).

In the coagulation of the latex by salting out, it is possible to use sodium chloride, calcium chloride, aluminum sulfate, or other known coagulants, but if employing magnesium sulfate, magnesium chloride, magnesium nitrate, or another magnesium salt, it is possible to reduce the amount of surfactant contained in the highly saturated nitrile rubber (A) even more, so these are preferable. The amount of the coagulant used, when designating the amount of nitrile rubber (a) to be hydrogenated as 100 parts by weight, is preferably 1 to 100 parts by weight, more preferably 5 to 50 parts by weight, particularly preferably 10 to 50 parts by weight. The coagulation temperature is preferably 10 to 80°C.

The solvent in the oil layer hydrogenation method is not particularly limited so long as a liquid organic compound dissolving nitrile rubber (a), but benzene, toluene, xylene, hexane, cyclohexane, tetrahydrofuran, methylethylketone, ethyl acetate, cyclohexanone, acetone, etc. are preferably used.

The catalyst of the oil layer hydrogenation method is not particularly limited so long as a known selective hydrogenation catalyst. A palladium-based catalyst and a rhodium-based catalyst are preferable, while a palladium-based catalyst (palladium acetate, palladium chloride, palladium hydroxide, etc.) is more preferable. These may be used in combinations of two or more types, but when using a rhodium-based catalyst and a palladium-based catalyst in combination, the palladium-based catalyst is preferably made the main active ingredient. These catalysts are usually used carried on a carrier. As the carrier, silica, silica-alumina, alumina, diatomite, activated carbon, etc. may be given as examples. The amount of the catalyst used, with respect to the amount of nitrile rubber (a) to be hydrogenated, is preferably 10 to 5000 weight ppm, more preferably 100 to 3000 weight ppm.

The hydrogenation reaction temperature of the oil layer hydrogenation method is preferably 0 to 200°C, more preferably 10 to 100°C, the hydrogen pressure is preferably 0.1 to 30 MPa, more preferably 0.2 to 20 MPa, and the reaction time is preferably 1 to 50 hours, more preferably 2 to 25 hours.

Alternatively, when producing the highly saturated nitrile rubber (A) by the aqueous layer hydrogenation method, the latex of the nitrile rubber (a) prepared by emulsion polymerization is preferably diluted by water if necessary and then hydrogenated.
Here, the aqueous layer hydrogenation method includes the (I) aqueous layer direct hydrogenation method performing the hydrogenation by providing hydrogen to the reaction system in the presence of a hydrogenation catalyst and the (II) aqueous layer indirect hydrogenation method performing the hydrogen by reduction in the presence of an oxidizing agent, reducing agent, and activating agent.

In the (I) aqueous layer direct hydrogenation method, the concentration of the nitrile rubber (a) of the aqueous layer (concentration in latex state) is preferably made 40 wt% or less to prevent agglomeration.
Further, the hydrogenation catalyst used is not particularly limited so long as a compound resistant to decomposition in water. As specific examples of the hydrogenation catalyst, in palladium catalysts, palladium salts of formic acid, propionic acid, lauric acid, succinic acid, oleic acid, phthalic acid, and other carboxylic acids; palladium chloride, palladium dichloro(cyclooctadiene), palladium dichloro(norbornadiene), ammonium hexachloropalladium (IV), and other palladium chlorinated compounds; palladium iodide and other iodides; palladium sulfate dihydrate, etc. may be mentioned. Among these, palladium salts of carboxylic acids, palladium dichloro(norbornadiene), and ammonium hexachloropalladium (IV) are particularly preferable. The amount of the hydrogenation catalyst used may be suitably determined, but is, with respect to the amount of nitrile rubber (a) to be hydrogenated, preferably 5 to 6000 weight ppm, more preferably 10 to 4000 weight ppm.

The reaction temperature in the aqueous layer direct hydrogenation method is preferably 0 to 300°C, more preferably 20 to 150°C, particularly preferably 30 to 100°C. If the reaction temperature is too low, the reaction speed is liable to fall. Conversely, if too high, hydrogenation of the nitrile groups and other secondary reactions may occur. The hydrogen pressure is preferably 0.1 to 30 MPa, more preferably 0.5 to 20 MPa. The reaction time is selected considering the reaction temperature, hydrogen pressure, target hydrogenation rate, etc.

In the aqueous layer direct hydrogenation method, after the end of the reaction, the hydrogenation catalyst in the latex is removed. As the method, for example, it is possible to adopt the method of adding activated carbon, an ion exchange resin, or other adsorbent and causing adsorption of the hydrogenation catalyst under stirring, then filtering or centrifugally separating the latex. Alternatively, it is also possible not to remove the hydrogenation catalyst but allow it to remain in the latex.

On the other hand, in the (II) aqueous layer indirect hydrogenation method, the concentration of the nitrile rubber (a) of the aqueous layer (concentration in latex state) is preferably 1 to 50 wt%, more preferably 1 to 40 wt%.

As the oxidizing agent used in the aqueous layer indirect hydrogenation method, oxygen, air, hydrogen peroxide, etc. may be mentioned. The amount of these oxidizing agents used is, in molar ratio with respect to the carbon-carbon double bonds (oxidizing agent:carbon-carbon double bonds), preferably in the range of 0.1:1 to 100:1, more preferably 0.8:1 to 5:1.
As the reducing agent used in the aqueous layer indirect hydrogenation method, hydrazine, hydrazine hydrate, hydrazine acetate, hydrazine sulfate, hydrazine hydrochloride, and other hydrazines or compounds releasing hydrazine may be used. The amount of these reducing agents used is, in molar ratio with respect to the carbon-carbon double bonds (reducing agent:carbon-carbon double bonds), preferably in the range of 0.1:1 to 100:1, more preferably 0.8:1 to 5:1.
As the activating agent used in the aqueous layer indirect hydrogenation method, ions of copper, iron, cobalt, lead, nickel, iron, tin, and other metals may be used. The amount of these activating agents used is, in molar ratio with respect to the carbon-carbon double bonds (activating agent:carbon-carbon double bonds), preferably 1:1000 to 10:1, more preferably 1:50 to 1:2.

The reaction in the aqueous layer indirect hydrogenation method is performed by heating in the range from 0°C to the reflux temperature. Due to this, a hydrogenation reaction is undergone. The range of heating at this time is preferably 0 to 250°C, more preferably 20 to 100°C, particularly preferably 40 to 80°C.

In both the direct hydrogenation method and indirect hydrogenation method at the aqueous layer, after the hydrogenation, coagulation by salting out, filtration, and drying are preferably performed. For the salting out, in the same way as the salting out of latex in the oil layer hydrogenation method, the above-mentioned magnesium salts are preferably used since they enable greater reduction of the amount of surfactant contained in the highly saturated nitrile rubber (A). Further, the filtration and drying processes after the coagulation may be performed by known methods.

### Cross-Linkable Nitrile Rubber Composition For Seal Material

The cross-linkable nitrile rubber composition for use as a seal material of the present invention is comprised of the above highly saturated nitrile rubber (A) for use as a seal material in which a cross-linking agent is blended.

As the cross-linking agent, a sulfur-based cross-linking agent or organic peroxide-based cross-linking agent is preferable.
As a sulfur-based cross-linking agent, powdered sulfur, precipitated sulfur, and other sulfurs; 4,4'-dithiomorpholine or tetramethyl thiuram disulfide, tetraethyl thiuram disulfide, polysulfide, and other organic sulfur compounds; etc. may be mentioned.
As an organic peroxide-based cross-linking agent, dicumyl peroxide, di-t-butyl peroxide, and other dialkyl peroxides; benzoyl peroxide, isobutyryl peroxide, and other diacyl peroxides; 2,5-dimethyl-2,5-bis(benzoylperoxy)hexane, t-butylperoxyisopropyl carbonate, and other peroxyesters; etc. may be mentioned.
The amount of the cross-linking agent blended is, with respect to the highly saturated nitrile rubber (A) as 100 parts by weight, preferably 0.2 to 20 parts by weight, more preferably 1 to 15 parts by weight.

Further, the cross-linkable nitrile rubber composition for use as a seal material of the present invention may contain, in addition to a cross-linking agent, other compounding agents usually used in the field of rubber processing, for example, carbon black, zinc acrylate, zinc methacrylate, and other reinforcing fillers; calcium carbonate, clay, and other nonreinforcing fillers, antioxidants, light stabilizers, primary amines and other anti-scorching agents, plasticizers, working aids, lubricants, adhesives, lubricating agents, flame retardants, acid acceptors, anti-fungal agents, anti-static agents, coloring agents, silane coupling agents, cross-linking accelerators, cross-linking aids, cross-linking retarders, etc. The amounts of these compounding agents may be suitably selected in accordance with the objective of adding them.

The cross-linking agent and other compounding agents are preferably mixed with the highly saturated nitrile rubber (A) in a nonaqueous system. The mixing method is not particularly limited, but normally the ingredients other than the cross-linking agent and thermally unstable cross-linking aid etc. are kneaded on a primary basis by a Bambury mixer, intermixer, kneader, or other mixer, then transferred to a roll etc., given the cross-linking agent etc., and kneaded on a secondary basis.

The cross-linkable nitrile rubber composition for use as a seal material of the present invention has a Mooney viscosity (ML₁₊₄(100°C)] (compound Mooney) of preferably 15 to 150, more preferably 40 to 120.

### Cross-Linked Rubber for Seal Material

The cross-linked rubber for use as a seal material of the present invention can be obtained by cross-linking the above cross-linkable nitrile rubber composition for a seal material.
In obtaining the cross-linked rubber for use as a seal material of the present invention, the rubber is shaped by a molding machine in accordance with the desired shape, for example, an extruder, injection molding machine, press, roll, etc. and a cross-linking reaction is used to fix the cross-linked rubber in shape. The rubber may be shaped in advance, then cross-linked or may be shaped and simultaneously cross-linked. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 1 hour.

Further, depending on the shape, size, etc. of the cross-linked rubber, sometimes even if the surface will be cross-linked, the inside may not be sufficiently cross-linked, so the rubber may be further heated for secondary cross-linking.

The cross-linked rubber for use as a seal material of the present invention uses the highly saturated nitrile rubber (A) where the amount of surfactant is reduced, so leaching of the contained ingredients by a solution containing an alcohol can be effectively prevented. In addition, the cross-linked rubber is superior in heat aging resistance and has little drop in strength characteristics even under a sustained heat load. In particular, the cross-linked rubber of the present invention has a rate of change of elongation at a heat load of 150°C for 72 hours of preferably 50% or less, more preferably 45% or less, and is superior in heat aging resistance.
For this reason, the cross-linked rubber for use as a seal material of the present invention is suitably used as a seal material used for sealing a solution containing an alcohol, preferably a seal material for an ink cartridge used for an ink jet type recording apparatus and a seal material for fuel oil.

The seal material when making the cross-linked rubber for use as a seal material of the present invention a seal material for an ink cartridge is not particularly limited, but is preferably packing. It is particularly preferably a packing attached for securing air tightness between an ink hole and a hollow needle when attached to an ink hole and a hollow needle formed at the ink feed path of the ink jet type recording apparatus is inserted into the ink hole.

Further, the solution containing an alcohol sealed by the seal material of the present invention when making the cross-linked rubber for use as a seal material of the present invention a seal material for an ink cartridge is not particularly limited, but in addition to an alcohol, water or a solution mainly containing a pigment, dye, etc. may be mentioned, but preferably it is a water soluble ink containing an alcohol. Further, the alcohol contained in the water soluble ink or other sealed solution is not particularly limited so long as it is an alcohol soluble in water. Any alcohol may be used, but an alcohol having a vapor pressure smaller than water is preferable. As such an alcohol, ethylene glycol, propylene glycol, 1,3-butanediol, 1,4-butanediol, 1,5-pentanediol, 2-butene-1,4-diol, diethylene glycol, triethylene glycol, tetraethylene glycol, dipropylene glycol, 2-methyl-2,4-pentandiol, glycerin, 1,2,6-hexanetriol, thiodiglycol, or other polyvalent alcohols (in particular, dihydric or trihydric alcohols); 2-methoxyethanol, 2-ethoxyethanol, 2-(methoxymethoxy)ethanol, 2-isopropoxyethanol, 2-butoxyethanol, 2-isopentyloxyethanol, and other alkoxy alcohols; ethylene glycol monomethyl ether, diethylene glycol monomethyl ether, diethylene glycol monoethyl ether, diethylene glycol monobutyl ether, triethylene glycol monomethyl ether, propylene glycol monomethyl ether, propylene glycol monoethyl ether, dipropylene glycol monomethyl ether, dipropylene glycol monoethyl ether, tripropylene glycol monomethyl ether, and other polyvalent alcohol ethers; furfuryl alcohol, tetrahydrofurfuryl alcohol, diacetone alcohol, etc. may be mentioned. Said individual alcohols have various types of effects in some cases, so they are preferably used considering these effects. For example, as alcohols also having an action in improving the prevention of drying of ink, glycerin, diethylene glycol, thiodiglycol, and other polyvalent alcohols may be suitably used, while as alcohols also having an action in promoting inpregnation of ink to paper, ethylene glycol monomethyl ether, diethylene glycol monobutyl ether, triethylene glycol monomethyl ether, or other polyvalent alcohol ethers may be suitably used. Further, these alcohols may be used as single types or in combinations of two types or more. Furthermore, water soluble ink containing an alcohol (ink for ink jet) may include, in addition to the above-mentioned alcohol, an alcohol having the effect of shortening the ink drying time or a low boiling point organic solvent. As such an alcohol or low boiling point organic solvent, for example, methanol, ethanol, n-propanol, i-propanol, n-butanol, sec-butanol, t-butanol, i-butanol, n-pentanol, or another C5 or less monovalent alcohol is preferable.

Furthermore, the content of the alcohol in a solution containing an alcohol is, in the solution as a whole, preferably in the amount of 0.1 to 98 wt%, more preferably 0.1 to 60 wt%, still more preferably 10 to 60 wt%, particularly preferably 40 to 60 wt%. In particular, the cross-linked rubber of the present invention is one obtained using the highly saturated nitrile rubber (A) of the present invention, so is one where the amount of surfactant is reduced. For this reason, even when used in contact with a solution where the amount of alcohol is relatively large, there is the advantage that it is possible to effectively prevent the leaching and formation of ingredients insoluble in the solution containing an alcohol. Note that, according to findings of the inventor, the ingredients insoluble in a solution containing alcohol, leached out or formed when using a highly saturated nitrile rubber in contact with alcohol, may be considered to mainly include the surfactant or be a result of reaction of the surfactant with the ingredients in the ink. For this reason, according to the present invention, by reducing the amount of surfactant in the above way, it is possible to effectively prevent the leaching and formation of such insoluble ingredients.

On the other hand, when making the cross-linked rubber for use as a seal material of the present invention a seal material for fuel oil, it is not particularly limited so long as a seal material attached to an automobile engine or other internal combustion engine, but is preferably an O-ring, packing, or gasket.

Further, the fuel oil sealed by the seal material when making the cross-linked rubber for use as a seal material of the present invention a seal material for fuel oil preferably is one containing an alcohol and gasoline or diesel oil. The alcohol constituting the fuel oil is preferably methanol or ethanol, more preferably ethanol. Furthermore, the content of the alcohol in the fuel oil is preferably in the amount of 0.1 to 98 wt%, more preferably 30 to 98 wt%, still more preferably 50 to 98 wt%, particularly preferably 70 to 98 wt%. In particular, the cross-linked rubber of the present invention is one obtained using the highly saturated nitrile rubber (A) of the present invention, so is one where the amount of surfactant is reduced. For this reason, even when used in contact with fuel oil with a relatively large amount of alcohol in this way, it is superior in fuel oil resistance. Further, the heat aging resistance is also good, so it is possible to reduce the permeability of the gasoline or diesel oil and alcohol forming the fuel oil and possible to effectively prevent dispersal of these.

### EXAMPLES

Below, the present invention will be explained further based on detailed examples, but the present invention is not limited to these examples. The "parts" in the examples are based on weight unless specially noted. Note that the tests and evaluations were based on the following.

### Iodine Value

The iodine value was measured in accordance with JIS K6235.

### Mooney Viscosity [ML₁₊₄ (100°C)]

The Mooney viscosity of the highly saturated nitrile rubber (polymer Mooney) and the Mooney viscosity of the cross-linkable nitrile rubber composition (compound Mooney) were measured in accordance with JIS K6300.

### Amount of Methanol Extraction

The amount of methanol extraction was measured by the following method. That is, rubber 6 g diced into 3 mm squares was made to disperse in 50 ml of methanol, then a Soxhlet extractor was used for extraction at 65°C for 6 hours, then the methanol was separated by filtration, then the methanol was removed by evaporation from the filtrate, then the result was dried in vacuo to obtain the methanol extraction content (solid content). Further, the weight ratio of the obtained methanol extraction content with respect to the highly saturated nitrile rubber before extraction (unit: wt%) was found, and this was made the amount of methanol extraction.

### Amount of Surfactant and Amount of Soap

The amount of surfactant and amount of soap in the highly saturated nitrile rubber were measured by the following method.
That is, a mixture of ethanol and toluene (ethanol: 70 vol%, toluene: 30 vol%) was used as the extraction solution, a similar method to JIS K6237 (titration by sodium hydroxide and hydrochloric acid using indicator) was used to find the amount of soap and the amount of surfactant (total amount of organic acids and soap), and the weight ratio of the extracted soap (unit: wt%) and the weight ratio of the surfactant (unit: wt%) with respect to the highly saturated nitrile rubber before extraction were found.

### Normal Physical Properties (Tensile Strength, Elongation,

### Tensile Stress, and Hardness)

First, the cross-linkable nitrile rubber composition was placed in a mold of a length of 15 cm, a width of 15 cm, and a depth of 0.2 cm and cross-linked at 170°C for 20 minutes with a press pressure of 10 MPa, then was secondarily cross-linked by a gear type oven at 170°C for 4 hours to thereby prepare a test piece of cross-linked rubber. Next, the obtained test piece was used in accordance with JIS K6251 to measure the tensile strength, elongation, and 100% tensile stress. Further, the hardness was measured in accordance with JIS K6253 using a Durometer Hardness Tester Type A.

### Heat Aging Resistance Test

In the same way as the above measurement of normal physical properties, a test piece of cross-linked rubber prepared by primary and secondary cross-linking was used in accordance with JIS K6257 (normal oven method) for application of a heat load of 150°C for 72 hours, then was measured for tensile strength, elongation, and 100% tensile stress in accordance with JIS K6251. Further, the hardness after heat load was measured in accordance with JIS K6253 using a Durometer hardness tester type A. Further, the rates of change of the tensile strength, elongation, and 100% tensile stress after heat load from the normal physical properties and the rate of change of the hardness after heat load from normal physical properties were found.

### Alcohol Contact Test (Alcohol Resistance)

Highly saturated nitrile rubber and cross-linked rubber prepared by primary and secondary cross-linking in the same way as the above normal physical properties were immersed in mixtures of isopropyl alcohol and water ((isopropyl alcohol 50% concentration solution, "high alcohol concentration solution") and (isopropyl alcohol 10% concentration solution, "low alcohol concentration solution")) under conditions of 25°C×24 hours and the solutions after immersion were examined to evaluate the alcohol resistance. Note that, the evaluation criteria were as follows:
Good: Alcohol solution clear with no precipitates.
Fair: Alcohol solution somewhat cloudy with very small amount of precipitates.
Poor: Alcohol solution cloudy with precipitates.

### Example 1

In a metal bottle, 0.2 part of sodium carbonate was dissolved in 200 parts of ion exchanged water. To this, potassium caprate (C₁₀ fatty acid soap:anionic surfactant acting as emulsifier) was added in 2.5 parts to prepare a soap aqueous solution. Further, as a dispersant, formaldehyde naphthalene sulfonate polycondensation product was added in 1.0 part. To this, acrylonitrile in 37 parts and t-dodecylmercaptan (molecular weight adjuster) in 0.5 part were successively charged, the gas inside was replaced three times with nitrogen, then 1,3-butadiene in 63 parts was charged. Further, the metal bottle was held at 5°C, cumen hydroperoxide (polymerization initiator) in 0.1 part and a reducing agent and chelating agent were charged in suitable quantities, and a polymerization reaction was caused for 16 hours while holding the temperature at 5°C. Next, a concentration 10 wt% of hydroquinone (polymerization anticatalyst) aqueous solution in 0.1 part was added to stop the polymerization reaction and a water temperature 60°C rotary evaporator was used to remove the residual monomer and obtain a latex of nitrile rubber. The obtained nitrile rubber was comprised of acrylonitrile monomer units in 37 wt% and butadiene monomer units in 63 wt%. The solid content concentration in the latex was 25 wt%.

Further, the latex obtained above was added to an aqueous solution containing 12 parts by weight of magnesium sulfate when designating the weight of the nitrile rubber component in the latex as 100 parts by weight. This was stirred to make the latex coagulate, then the latex was washed by water while filtering it out, then dried in vacuo at 60°C for 12 hours to obtain a nitrile rubber (a1).

Next, the obtained nitrile rubber (a1) was dissolved in acetone to a concentration of 12 wt% and placed in an autoclave, an amount of palladium-silica catalyst becoming 1000 weight ppm with respect to the weight of the nitrile rubber (a1) was added, and a hydrogenation reaction was performed at 3.0 MPa. After the end of the hydrogenation reaction, the result was poured into a large amount of water to cause it to coagulate, then was filtered out and dried to obtain the highly saturated nitrile rubber (A1).

To the highly saturated nitrile rubber (A1) obtained by the above method as 100 parts by weight, carbon black (MT Thermax, made by Lehmann & Voss) in 60 parts by weight and an organic peroxide-based cross-linking agent (Vul-Cup40KE, made by Hercules) in 8 parts by weight were blended. The mixture was mixed and kneaded using a roll at 50°C to obtain a cross-linkable nitrile rubber composition.
The above prepared highly saturated nitrile rubber (A1) was evalulated for iodine value, amount of methanol extraction, amount of surfactant, amount of soap, Mooney viscosity (polymer Mooney) and alcohol contact test, while the cross-linkable nitrile rubber composition was evaluated for Mooney viscosity (compound Mooney) and the cross-linked rubber was evaluated for normal physical properties (tensile strength, elongation, 100% tensile stress, and hardness), heat aging resistance test, and alcohol contact test. The results are shown in Table 1.

### Example 2

Except for replacing the magnesium sulfate aqueous solution used as a coagulant of the nitrile rubber latex in Example 1 with an aqueous solution containing 6 parts by weight of aluminum sulfate when designating the amount of nitrile rubber component in the latex as 100 parts by weight, the same procedure was followed as in Example 1 to obtain highly saturated nitrile rubber (A2). The obtained highly saturated nitrile rubber (A2) was used for evaluation in the same way as Example 1. The results are shown in Table 1.

### Comparative Example 1

Except for replacing the 2.5 parts of potassium caprate used as an emulsifier in the emulsion polymerization in Example 1 with the same amount of potassium stearate (C₁₈ fatty acid soap:anionic surfactant acting as emulsifier), the same procedure was followed as in Example 1 to obtain a latex of nitrile rubber (a2). The obtained nitrile rubber (a2) was comprised of acrylonitrile monomer units in 37 wt% and butadiene monomer units in 63 wt%. The solid content concentration in the latex was 25 wt%.

Next, for the obtained latex of nitrile rubber (a2), except for replacing the magnesium sulfate aqueous solution with an aqueous solution containing 2 parts by weight of aluminum sulfate when designating the amount of the nitrile rubber component in the latex as 100 parts by weight, the same procedure was followed as in Example 1 to obtain nitrile rubber (a2). Except for replacing the nitrile rubber (a1) with the nitrile rubber (a2), the same procedure was followed as in Example 1 to perform a hydrogenation reaction to obtain highly saturated nitrile rubber (A3). The obtained highly saturated nitrile rubber (A3) was used for evaluation in the same way as Example 1. The results are shown in Table 1.

**[Table 1]**

| | | | | Example | | Comparetive Example |
|---|---|---|---|---|---|---|
| | | | | 1 | 2 | 1 |
| Emulsifier | Name of compound | | | Potassium caprate | Potassium caprate | Potassium stearate |
| | Amount | | (parts) | 2.5 | 2.5 | 2.5 |
| Coagulant | Name of compound | | | Magnesium sulfate | Aluminum sulfate | Aluminum sulfate |
| | Amount | | (parts) | 12 | 6 | 2 |
| Highly saturated nitrile rubber | Iodine value | | | 28 | 28 | 28 |
| | Amount of methanol extraction | | (wt%) | 0.50 | 0.69 | 0.92 |
| | Amount of surfactant | | (wt%) | 0.1 | 0.28 | 0.52 |
| | Amount of soap | | (wt%) | 0.022 | 0.031 | 0.11 |
| | Mooney viscosity | | [ML₁₊₄(100° C)] | 70 | 70 | 70 |
| | Alcohol immersion test | Low alcohol concentration | | Good | Good | Fair |
| | | High alcohol concentration | | Good | Good | Poor |
| Cross-linked nitrile rubber | Compound Mooney viscosity | | [ML₁₊₄(100° C)] | 98 | 98 | 100 |
| | Normal physical properties | Tensile strength | (MPa) | 19.1 | 19.0 | 19.0 |
| | | Elongation | (%) | 270 | 260 | 245 |
| | | 100% tensile stress | (MPa) | 5.4 | 5.5 | 6.0 |
| | | Hardness | (Duro A) | 71 | 71 | 71 |
| | Heat aging resistance test | Tensile strength | (MPa) | 15.9 | 14.0 | 7.0 |
| | | Elongation | (%) | 150 | 130 | 85 |
| | | 100% tensile stress | (MPa) | 7.3 | 7.0 | - |
| | | Hardness | (Duro A) | 72 | 72 | 73 |
| | | Rate of change of tensile strength | (%) | -17 | -26 | -63 |
| | | Rate of change of elongation | (%) | -44 | -50 | -65 |
| | | Rate of change of 100% tensile stress | (%) | +35 | +27 | - |
| | | Degree of change of hardness | (Duro A) | +1 | +1 | +2 |
| | Alcohol immersion test | Low alcohol concentration | | Good | Good | Fair |
| | | High alcohol concentration | | Good | Good | Poor |

As shown in Table 1, the highly saturated nitrile rubbers produced by Examples 1 and 2 by hydrogenation reaction of the nitrile rubbers obtained by emulsion polymerization using C₁₀ or less soaps as surfactants acting as emulsifiers had an iodine value of 80 or less, an amount of methanol extraction of 0.7 wt% or less, a content of surfactant of 0.4 wt% or less, and a content of soap of 0.08 wt% or less. Further, the cross-linked product of this highly saturated nitrile rubber can be confirmed to have a good alcohol resistance (alcohol immersion test) as well and to be suitable for a seal material for sealing a water soluble ink or other solution containing an alcohol or a seal material for sealing fuel oil containing an alcohol. In particular, even when used as a seal material for sealing a water soluble ink or other solution containing an alcohol, preferably a solution with an alcohol content of 0.1 to 60 wt%, particularly preferably 40 to 60 wt%, it can be confirmed that the leaching out of impurities is kept low. In addition, in these Examples 1 and 2, the rate of change of elongation of the cross-linked rubber under a heat load of 150°C for 72 hours was 50% or less, that is, they had a good heat aging resistance.
On the other hand, in Comparative Example 1, the amount of methanol extraction was 0.9 wt% or more, the content of surfactant was 0.5 wt% or more, the content of soap was 0.1 wt% or more, and therefore the cross-linked rubber was unsuitable as a seal material for sealing a water soluble ink or alcohol-containing fuel oil or other solution containing an alcohol. That is, when used as a seal material for sealing a water soluble ink or alcohol-containing fuel oil or other solution containing an alcohol, there was large leaching of impurities. Furthermore, regarding the alcohol resistance (alcohol immersion test), when immersed in a low alcohol concentration solution, a very small amount of precipitates was observed, but when immersed in a high alcohol concentration solution, the precipitation become remarkable (showing that nozzles of recording head easily became clogged) as a trend. Further, in Comparative Example 1, the rate of change of elongation of the cross-linked rubber under a heat load of 150°C for 72 hours was a large 65% and the heat aging resistance was poor. In addition, in Comparative Example 1, the rate of change of elongation under a heat load was too large and the cross-linked rubber did not elongate 100%, so the 100% tensile stress of the heat aging resistance test and rate of change of 100% tensile stress could not be measured.

## Claims

1. Use of a highly saturated nitrile rubber as a seal material used for sealing a solution containing an alcohol, wherein
an iodine value of the highly saturated nitrile rubber is 80 or less and a content of a surfactant of the highly saturated nitrile rubber is 0.4 wt% or less, and
the content of a surfactant of the highly saturated nitrile rubber is found by using a mixture of ethanol and toluene (ethanol 70 vol%, toluene 30 vol%) as an extraction solution, finding the amount of surfactant (total of amount of organic acid and amount of soap) by a method similar to JIS K6237.

2. The use of claim 1, wherein
a content of a soap of the highly saturated nitrile rubber is 0.08 wt% or less, and
the content of a soap of the highly saturated nitrile rubber is found by using a mixture of ethanol and toluene (ethanol 70 vol%, toluene 30 vol%) as an extraction solution, finding the amount of surfactant by a method similar to JIS K6237.

3. The use of claim 1 or 2, wherein
an amount of methanol extraction of the highly saturated nitrile rubber is 0.7 wt% or less,
the amount of methanol extraction of the highly saturated nitrile rubber is found by calculating the weight ratio of a methanol extract of the highly saturated nitrile rubber to the highly saturated nitrile rubber before extraction, and
the methanol extract of the highly saturated nitrile rubber is obtained by dispersing 6 g of the highly saturated nitrile rubber diced into 3 mm squares in 50 ml of methanol, extracting by using a Soxhlet extractor at 65°C for 6 hours, separating the methanol by filtration and evaporating away the methanol from the filtrate, and drying the residue in vacuo.

4. The use of any one of claims 1 to 3, wherein
the highly saturated nitrile rubber is one produced by performing a hydrogenation reaction on nitrile rubber obtained by emulsion polymerization using a C₆ to C₁₀ soap.

5. The use of claim 4, wherein the surfactant is a caprate.

6. Use of a cross-linkable nitrile rubber composition as a seal material used for sealing a solution containing an alcohol, wherein
the cross-linkable nitrile rubber composition is obtaind by blending a highly saturated nitrile rubber as set forth in any one of claims 1 to 5 with a cross-linking agent.

7. Use of a cross-linked rubber as a seal material used for sealing a solution containing an alcohol, wherein
the cross-linked rubber is obtained by cross-linking a cross-linkable nitrile rubber composition as set forth in claim 6.

8. The use of claim 7, wherein
the cross-linked rubber is used as a seal material for an ink cartridge.

9. The use of claim 7, wherein
the cross-linked rubber is used as a seal material for fuel oil.

10. The use of claim 9, wherein
the fuel oil is ethanol-containing gasoline or ethanol-containing diesel oil.

## Patentansprüche

1. Verwendung eines hochgesättigten Nitrilkautschuks als ein Versiegelungsmaterial, das zum Versiegeln einer einen Alkohol enthaltenden Lösung verwendet wird, wobei
die Iodzahl des hochgesättigten Nitrilkautschuks 80 oder weniger ist und der Gehalt des hochgesättigten Nitrilkautschuks an Tensid 0,4 Gew.-% oder weniger ist und
der Gehalt des hochgesättigten Nitrilkautschuks an Tensid gefunden wird, indem ein Gemisch aus Ethanol und Toluol (Ethanol 70 Vol.-%, Toluol 30 Vol.-%) als Extraktionslösung verwendet wird, wobei die Menge an Tensid (Gesamtmenge an organischer Säure und Menge an Seife) durch ein Verfahren ähnlich JIS K6237 gefunden wird.

2. Verwendung gemäß Anspruch 1, wobei
der Gehalt des hochgesättigten Nitrilkautschuks an Seife 0,08 Gew.-% oder weniger ist und
der Gehalt des hochgesättigten Nitrilkautschuks an Seife durch Verwendung eines Gemisches aus Ethanol und Toluol (Ethanol 70 Vol.-%, Toluol 30 Vol.-%) als Extraktionslösung gefunden wird, wobei die Menge an Tensid durch ein Verfahren ähnlich JIS K6237 gefunden wird.

3. Verwendung gemäß Anspruch 1 oder 2, wobei die Menge der Methanolextraktion des hochgesättigten Nitrilkautschuks 0,7 Gew.-% oder weniger ist,
die Menge der Methanolextraktion des hochgesättigten Nitrilkautschuks gefunden wird, indem das Gewichtsverhältnis eines Methanolextraktes des hochgesättigten Nitrilkautschuks zu dem hochgesättigten Nitrilkautschuk vor Extraktion berechnet wird, und
der Methanolextrakt des hochgesättigten Nitrilkautschuks erhalten wird, indem 6 g des hochgesättigten Nitrilkautschuks, in 3 mm-Quadrate geschnitten, in 50 ml Methanol dispergiert werden, unter Verwendung eines Soxhlet-Extraktors bei 65°C für 6 Stunden extrahiert wird, das Methanol durch Filtration entfernt wird und das Methanol aus dem Filtrat verdampft wird und der Rückstand in vacuo getrocknet wird.

4. Verwendung gemäß einem der Ansprüche 1 bis 3, wobei der hochgesättigte Nitrilkautschuk einer ist, der durch Durchführen einer Hydrierungsreaktion an Nitrilkautschuk, der durch Emulsionspolymerisation unter Verwendung einer C₆- bis C₁₀-Seife erhalten worden war, produziert wird.

5. Verwendung gemäß Anspruch 4, wobei das Tensid ein Caprat ist.

6. Verwendung einer vernetzbaren Nitrilkautschukzusammensetzung als Versiegelungsmaterial, das zur Versiegelung einer einen Alkohol enthaltenden Lösung verwendet wird, wobei
die vernetzbare Nitrilkautschukzusammensetzung erhalten wird, indem ein hochgesättigter Nitrilkautschuk, wie er in einem der Ansprüche 1 bis 5 beschrieben ist, mit einem Vernetzungsmittel gemischt wird.

7. Verwendung eines vernetzten Kautschuks als Versiegelungsmaterial, das zur Versiegelung einer einen Alkohol enthaltenden Lösung verwendet wird, wobei
der vernetzte Kautschuk durch Vernetzung einer vernetzbaren Nitrilkautschukzusammensetzung, wie in Anspruch 6 beschrieben, erhalten wird.

8. Verwendung gemäß Anspruch 7, wobei der vernetzte Kautschuk als Versiegelungsmaterial für eine Tintenkartusche verwendet wird.

9. Verwendung gemäß Anspruch 7, wobei der vernetzte Kautschuk als Versiegelungsmaterial für Schweröl verwendet wird.

10. Verwendung gemäß Anspruch 9, wobei das Schweröl Ethanol enthaltendes Benzin oder Ethanol enthaltendes Dieselöl ist.

## Revendications

1. Utilisation d'un caoutchouc nitrile hautement saturé comme matériau d'étanchéité utilisé pour étanchéifier une solution contenant un alcool, dans laquelle
l'indice d'iode du caoutchouc nitrile hautement saturé est de 80 ou moins et la teneur en un agent tensio-actif du caoutchouc nitrile hautement saturé est inférieure ou égale à 0,4% en poids et
la teneur en un agent tensio-actif du caoutchouc nitrile hautement saturé est trouvée en utilisant un mélange d'éthanol et de toluène (l'éthanol 70% en volume, le toluène 30% en volume) comme une solution d'extraction, la quantité d'agent tensio-actif (le total de quantité d'acide organique et de quantité de savon) étant trouvée par une méthode similaire à celle de JIS K6237.

2. L'utilisation selon la revendication 1, dans laquelle
la teneur en un savon du caoutchouc nitrile hautement saturé est inférieure ou égale à 0,08% en poids et
la teneur en un savon du caoutchouc nitrile hautement saturé est trouvée en utilisant en mélange d'éthanol et de toluène (l'éthanol 70% en volume, le toluène 30% en volume) comme une solution d'extraction, la quantité d'agent tensio-actif étant trouvée par une méthode similaire à celle de JIS K6237.

3. L'utilisation selon la revendication 1 ou 2, dans laquelle
une quantité d'extraction en méthanol du caoutchouc nitrile hautement saturé est inférieure ou égale à 0,7% en poids,
la quantité de l'extraction en méthanol du caoutchouc nitrile hautement saturé est trouvée en calculant le rapport du poids d'un extrait de méthanol du caoutchouc nitrile hautement saturé au caoutchouc nitrile hautement saturé avant l'extraction, et
l'extrait de méthanol du caoutchouc nitrile hautement saturé est obtenu par les étapes consistant à disperser 6 g du caoutchouc nitrile hautement saturé coupé en carrés de 3 mm dans 50 ml de méthanol, à extraire en utilisant un appareil de Soxhlet à 65°C pendant 6 heures, à séparer le méthanol par filtration et évaporer le méthanol du filtrat, et à sécher le résidu in vacuo.

4. L'utilisation selon l'une quelconque des revendications 1 à 3, dans laquelle le caoutchouc nitrile hautement saturé est un caoutchouc produit en effectuant une réaction d'hydrogénation avec un caoutchouc nitrile obtenu par polymérisation en émulsion en utilisant un savon en C₆ à C₁₀.

5. Utilisation selon la revendication 4, dans laquelle ledit agent tensio-actif est un caprate.

6. Utilisation d'une composition de caoutchouc nitrile réticulable comme matériau d'étanchéité utilisé pour d'étanchéifier une solution contenant un alcool, dans laquelle
la composition de caoutchouc nitrile réticulable est obtenue en mélangeant un caoutchouc nitrile hautement saturé comme indiqué dans l'une quelconque des revendications 1 à 5 avec un agent de réticulation.

7. Utilisation d'un caoutchouc réticulé comme matériau d'étanchéité utilisé pour étanchéifier une solution contenant un alcool, dans laquelle
le caoutchouc réticulé est obtenu par réticulation d'une composition de caoutchouc nitrile réticulable selon la revendication 6.

8. Utilisation selon la revendication 7, dans laquelle le caoutchouc réticulé est utilisé comme matériau d'étanchéité pour une cartouche d'encre.

9. Utilisation selon la revendication 7, dans laquelle le caoutchouc réticulé est utilisé comme matériau d'étanchéité pour le mazout.

10. Utilisation selon la revendication 9, dans laquelle le mazout est de l'essence contenant de l'éthanol ou de l'huile de diesel contenant de l'éthanol.
